# EUROPÄISCHE PATENTANMELDUNG

(11) **EP 2 136 156 A2**
(43) Veröffentlichungstag der Anmeldung: **23.12.2009**
(21) Anmeldenummer: 09007572.2
(22) Anmeldetag: 09.06.2009
(51) Int. Cl.: F24J 2/54, H01L 31/042

(54) **Nachführeinrichtung zur Anpassung der Ausrichtung eines Traggestells an den Sonnenstand**

(30) Priorität: 20.06.2008 AT 9952008
(71) Anmelder: Zimmermann, Jürgen, 6900 Bregenz (AT)
(72) Erfinder: Klien, Stefan, Dipl.-Ing. (FH), 6845 Hohenems (AT); Surberg, Cord Henrik, Dr. Tech. Dipl.-Min., 6800 Feldkirch (AT); Zimmermann, Jürgen, 6900 Bregenz (AT)
(74) Vertreter: Hofmann, Ralf U.

(57) **Zusammenfassung**

Eine Nachführeinrichtung zur Anpassung der Ausrichtung eines Traggestells (1) an den Sonnenstand, insbesondere für Fotovoltaikanlagen, umfasst eine Schwenkeinheit (3), welche gegenüber einem Steher (4) mittels einem unteren Stellantrieb (8) um eine horizontale untere Achse (6) verschwenkbar ist und gegenüber welcher das Traggestell (1) mittels einem oberen Stellantrieb (11) um eine obere Achse (7) verschwenkbar ist, die rechtwinkelig zur unteren Achse (6) steht und in einer auf die Verschwenkung der Schwenkeinheit (3) um die untere Achse (6) bezogenen Neutralstellung der Schwenkeinheit (3) horizontal liegt. Die Schwenkeinheit (3) weist einen Basisabschnitt (14) und mindestens einen von diesem in der auf die Verschwenkung der Schwenkeinheit (3) um die untere Achse (6) bezogenen Neutralstellung der Schwenkeinheit (3) nach oben abstehenden oberen Lagerabschnitt (15, 16) auf, an dem das Traggestell (1) um die obere Achse (7) verschwenkbar gelagert ist. Die Schwenkeinheit (3) weist weiters mindestens einen vom Basisabschnitt (14) in der auf die Verschwenkung der Schwenkeinheit (3) um die untere Achse (6) bezogenen Neutralstellung der Schwenkeinheit (3) nach unten abstehenden unteren Lagerabschnitt (18, 19) auf, an dem die Schwenkeinheit (3) gegenüber dem Steher (4) um die untere Achse (6) verschwenkbar gelagert ist. (Fig. 2)

## Beschreibung

Die Erfindung bezieht sich auf eine Nachführeinrichtung zur Anpassung der Ausrichtung eines Traggestells an den Sonnenstand, insbesondere für Fotovoltaikanlagen, mit einer Schwenkeinheit, welche gegenüber einem Steher mittels einem unteren Stellantrieb um eine horizontale untere Achse verschwenkbar ist und gegenüber welcher das Traggestell mittels einem oberen Stellantrieb um eine obere Achse verschwenkbar ist, die rechtwinkelig zur unteren Achse steht und in einer auf die Verschwenkung der Schwenkeinheit um die untere Achse bezogenen Neutralstellung der Schwenkeinheit horizontal liegt, und welche einen Basisabschnitt und mindestens einen von diesem in der auf die Verschwenkung der Schwenkeinheit um die untere Achse bezogenen Neutralstellung der Schwenkeinheit nach oben abstehenden oberen Lagerabschnitt aufweist, an dem das Traggestell um die obere Achse verschwenkbar gelagert ist.

Bekannt sind Sonnen-Nachführeinrichtungen für Fotovoltaikanlagen, bei denen das die Solarzellen tragende Traggestell einerseits um eine vertikale Achse (Azimut-Achse) andererseits um eine horizontale Achse (Elevations-Achse) verschwenkbar ist. Zur Ausbildung der vertikalen Achse werden Drehkränze eingesetzt, welche beispielsweise Verzahnungen aufweisen, mit denen ein rotatorischer Stellantrieb zusammenwirkt. Nachteilig an diesen Einrichtungen ist der relativ hohe Fertigungsaufwand.

Bekannt geworden ist weiters bereits eine Nachführeinrichtung der eingangs genannten Art. Die Schwenkeinheit umfasst einen balkenförmigen Träger, der gegenüber einer Stütze um eine untere horizontale Achse verschwenkbar ist, die in die Ost-West-Richtung ausgerichtet ist. Der balkenförmige Träger besitzt eine Mehrzahl von entlang des Trägers beabstandeten nach oben abstehenden Laschen, mit denen die Träger des Traggestells um eine obere Achse verschwenkbar verbunden sind. Die untere und die obere Achse stehen rechtwinkelig zueinander. In einer Neutralstellung der Schwenkeinheit bezüglich einer Verschwenkung um die untere Achse liegt der die Schwenkeinheit bildende Träger horizontal und mit ihm die obere Achse. Der Azimut und die Elevation werden durch eine Kombination der Verschwenkung um die beiden Achsen eingestellt, wofür separate Stellantriebe vorhanden sind, welche von Spindelantrieben gebildet werden. Ein Nachteil dieser Einrichtung besteht im begrenzten Schwenkbereich des die Schwenkeinheit bildenden Trägers um die untere Achse. Auch der Schwenkbereich des Traggestells um die obere Achse ist begrenzt. Die Nachführbarkeit wird dadurch eingeschränkt.

Aufgabe der Erfindung ist es eine Nachführeinrichtung der eingangs genannten Art mit einem vergrößerten Nachführbereich bereitzustellen. Erfindungsgemäß gelingt dies durch eine Nachführeinrichtung mit den Merkmalen des Anspruchs 1.

Durch die Ausbildung der Schwenkeinheit mit - bezogen auf eine Neutralstellung der Verschwenkung um die untere Achse - sowohl mindestens einem vom Basisabschnitt nach oben abstehenden oberen Lagerabschnitt, an dem das Traggestell um die obere Achse verschwenkbar gelagert ist, als auch mindestens einem vom Basisabschnitt nach unten abstehenden unteren Lagerabschnitt, an dem die Schwenkeinheit gegenüber dem Träger um die untere Achse verschwenkbar gelagert ist, kann ein vergrößerter möglicher Schwenkbereich um die untere Achse erreicht werden. Vorzugsweise ist diese untere Schwenkachse hierbei in die Nord-Süd-Richtung ausgerichtet und der Schwenkbereich um die untere Achse beträgt ausgehend von der Neutralstellung der Schwenkeinheit in beide Schwenkrichtungen zumindest 70°, besonders bevorzugt mindestens 90°.

In einer vorteilhaften Ausführungsform der Erfindung ist das Traggestell um die obere Achse, welche in der Neutralstellung der Schwenkeinheit bezüglich der Verschwenkung um die untere Achse in Ost-West-Richtung ausgerichtet ist, um mindestens 60° verschwenkbar, wobei ein Wert von mindestens 80° besonders bevorzugt ist. Günstigerweise steht hierzu der mindestens eine obere Lagerabschnitt vom Basisabschnitt der Schwenkeinheit schräg nach oben ab.

Aus Stabilitätsgründen ist es vorteilhaft, wenn mindestens zwei obere Lagerabschnitte vorhanden sind, mittels denen mindestens zwei separate in Richtung der oberen Achse voneinander beabstandete Schwenklager ausgebildet werden, und mindestens zwei untere Lagerabschnitte vorhanden sind, mittels denen mindestens zwei separate in Richtung der unteren Achse voneinander beabstandete Schwenklager ausgebildet werden. Um einen möglichst großen Schwenkwinkel um die obere Achse zu erreichen, ist hierbei vorzugsweise eine die obere Achse aufweisende und rechtwinkelig zur unteren Achse stehende Ebene seitlich neben den mindestens zwei unteren Lagerabschnitten angeordnet (also nicht im Bereich zwischen den beiden unteren Lagerabschnitten bzw., falls mehr als zwei untere Lagerabschnitte vorhanden sind, nicht im Bereich zwischen den zwei äußeren unteren Lagerabschnitten).

In einer vorteilhaften Ausführungsform der Erfindung greift der obere Stellantrieb einerseits am Traggestell an, wobei er am Traggestell oder einem mit diesem starr verbundenen Teil angelenkt ist, andererseits an einem Arm der Schwenkeinheit, der vom Bereich des Basisabschnitts der Schwenkeinheit, von dem der mindestens eine obere Lagerabschnitt und der mindestens eine untere Lagerabschnitt ausgehen, im Wesentlichen horizontal absteht, d.h. in einem Winkel von +/- 30° zur Horizontalen. Der obere Stellantrieb ist hierbei wiederum direkt am Arm angelenkt, vorzugsweise im Bereich von dessen freiem Ende, oder an einem mit dem Arm, vorzugsweise im Bereich von dessen freiem Ende, starr verbundenen Teil angelenkt. Es kann hierbei bei einer einfachen Ausbildung ein großer durch den oberen Stellantrieb einstellbarer Schwenkwinkel um die obere Achse erreicht werden.

Weitere Vorteile und Einzelheiten der Erfindung werden im Folgenden anhand der beiliegenden Zeichnung erläutert. In dieser zeigen:
Fig. 1 eine Schrägsicht eines Ausführungsbeispiels einer erfindungsgemäßen Einrichtung, wobei Neutralstellungen bezüglich der Verschwenkung um die untere Achse und die obere Achse eingenommen sind (="Nullstellung");
Fig. 2 eine Schrägsicht der Einrichtung von Fig. 1 in einer demgegenüber verschwenkten Stellung;
Fig. 3 eine Seitenansicht der Nachführeinrichtung, Blickrichtung A in Fig. 7, in der Stellung entsprechend Fig. 1;
Fig. 4 und 5 Seitenansichten entsprechend Fig. 3, in den gegenüber der Nullstellung maximal um die untere Achse in die beiden Schwenkrichtungen verschwenkten Stellungen;
Fig. 6 eine Schrägsicht einer weiteren gegenüber der Nullstellung um die untere Achse verschwenkten Stellung (im Bereich zwischen der Neutralstellung und maximal verschwenkten Stellung);
Fig. 7 eine Seitenansicht in der Nullstellung, Blickrichtung B in Fig. 3;
Fig. 8 eine Seitenansicht entsprechend Fig. 7, aber in einer gegenüber der Nullstellung um die obere Achse verschwenkten Stellung (in einer mittleren Stellung zwischen der Neutralstellung und der maximal verschwenkten Stellung);
Fig. 9 eine Seitenansicht entsprechend Fig. 8, aber im maximal um die obere Achse verschwenkten Zustand;
Fig. 10 eine Schrägsicht der Nachführeinrichtung in einer weiteren gegenüber der Nullstellung um die obere Achse verschwenkten Stellung (in einer Stellung zwischen der Neutralstellung und der maximal verschwenkten Stellung);
Fig. 11 einen vergrößerten Ausschnitt von Fig. 10.

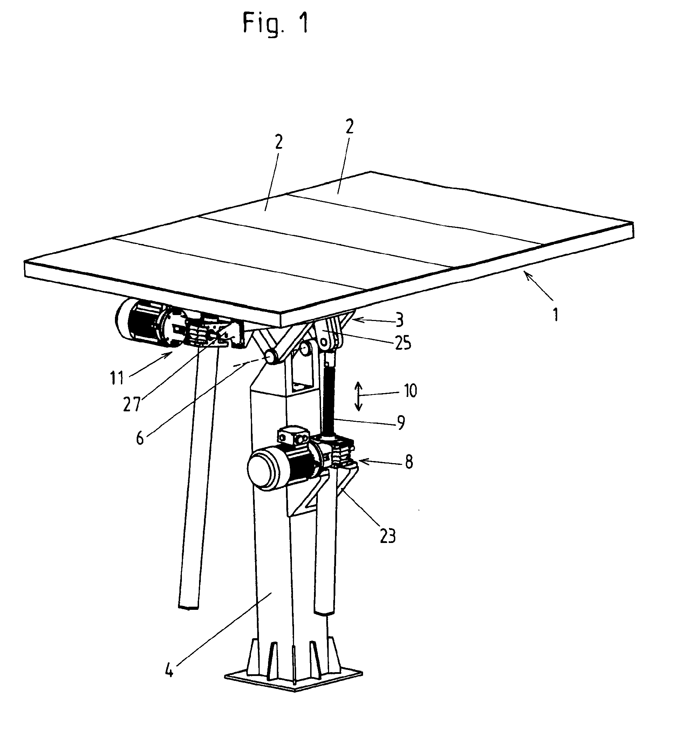

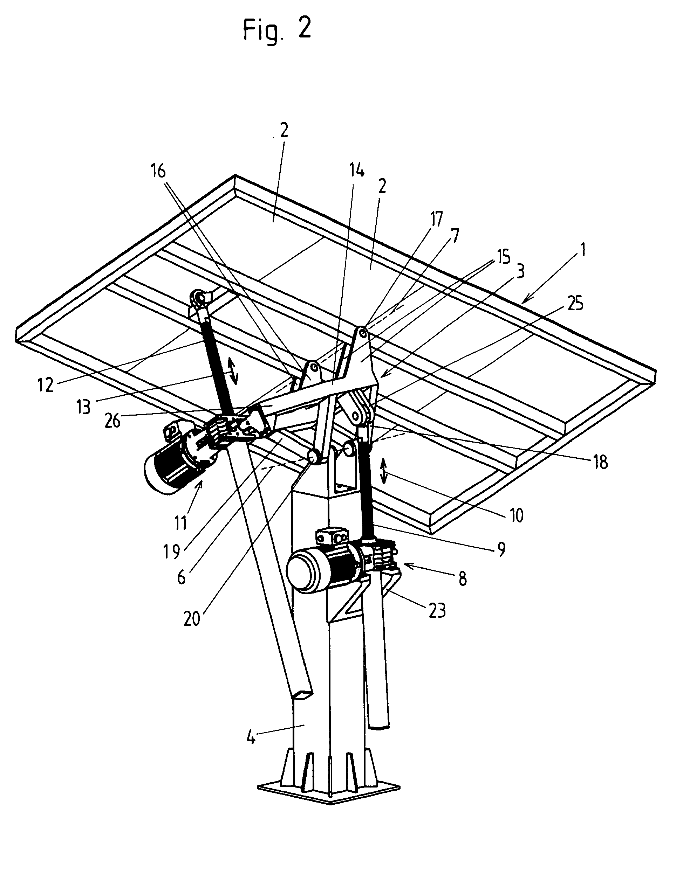

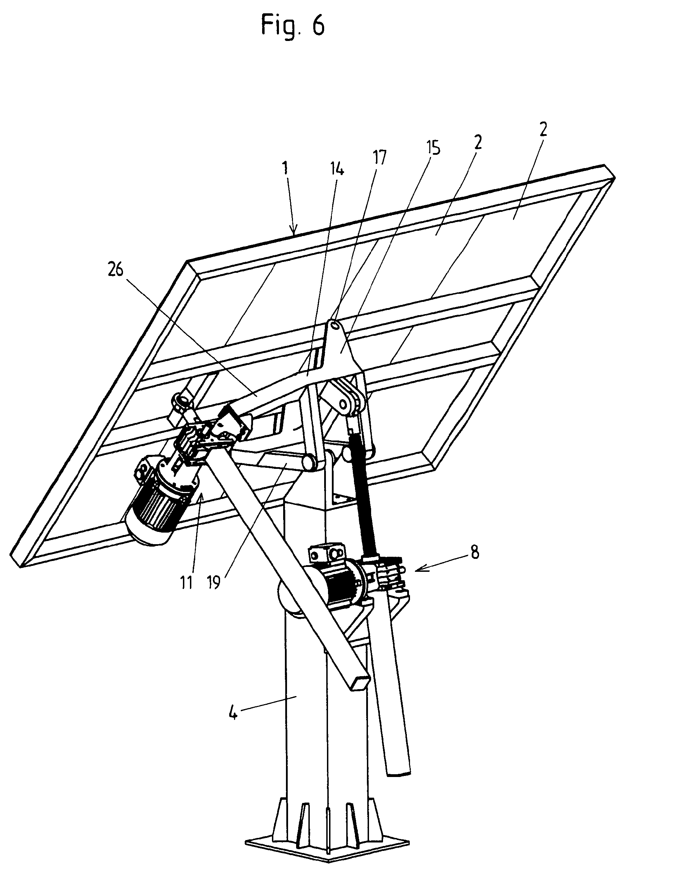

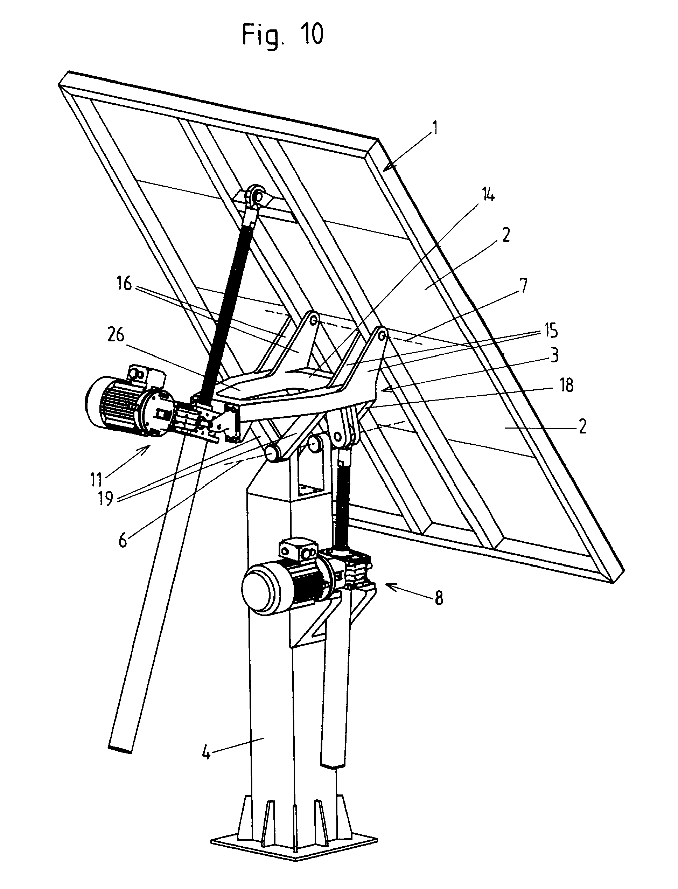

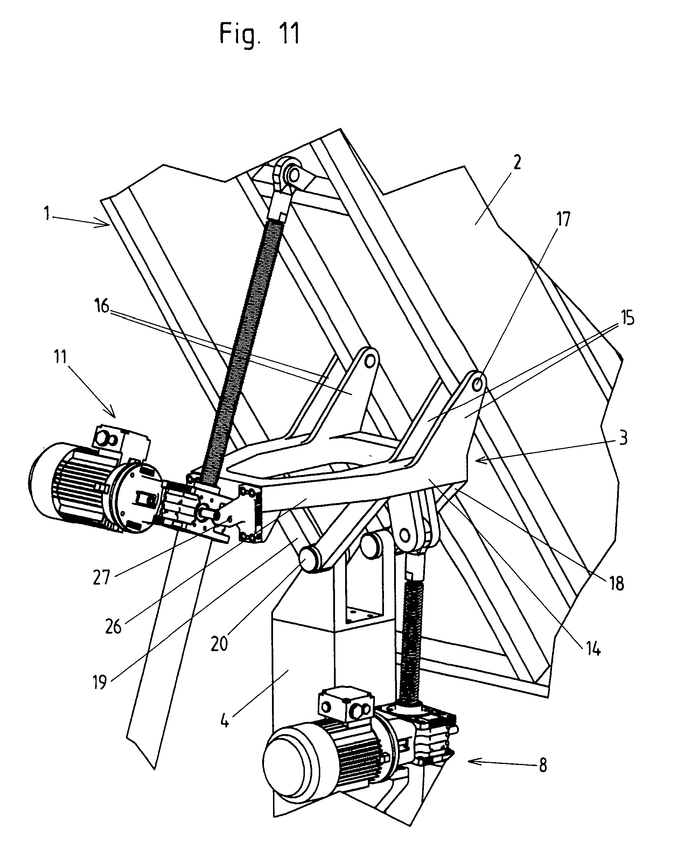

Ein Ausführungsbeispiel einer Nachführeinrichtung gemäß der Erfindung wird im Folgenden anhand der Fig. 1 bis 11 erläutert. Eine solche Nachführeinrichtung, die auch als "Tracker" bezeichnet wird, weist ein Traggestell 1 auf, das gegenüber dem Sonnenstand ausgerichtet wird. Das Traggestell 1 bildet eine Anlageebene aus, an der getragene Elemente anliegen, beispielsweise in den Figuren nur schematisch angedeutete Solarzellenmodule 2. Mittels der Nachführeinrichtung kann die Anlageebene des Traggestells 1 bzw. können die an ihr anliegenden flächigen Elemente dem Sonnenstand nachgeführt werden. Bevorzugterweise kann hierbei über den gesamten Weg der Sonne eine Ausrichtung rechtwinkelig zum Sonneneinfall erfolgen, günstigerweise zumindest aber über die drei Viertel des Weges der Sonne, in denen diese ihren höchsten Stand aufweist.

Das Traggestell 1 kann beispielsweise wie dargestellt rahmenartig ausgebildet sein, mit einem Trägerrost, der mehrere in einer Ebene liegende Rahmenschenkel umfasst.

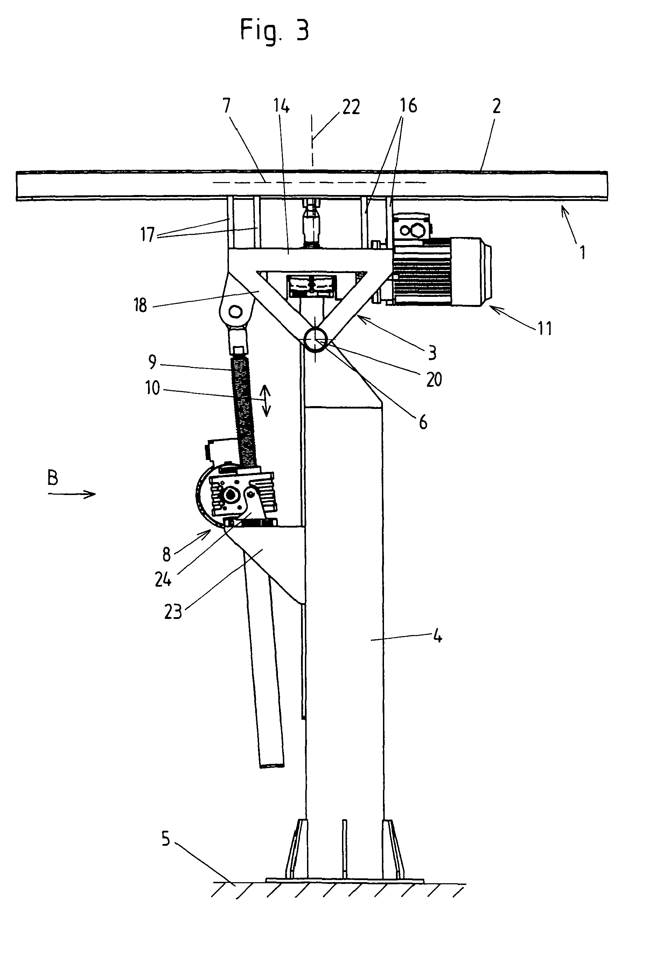

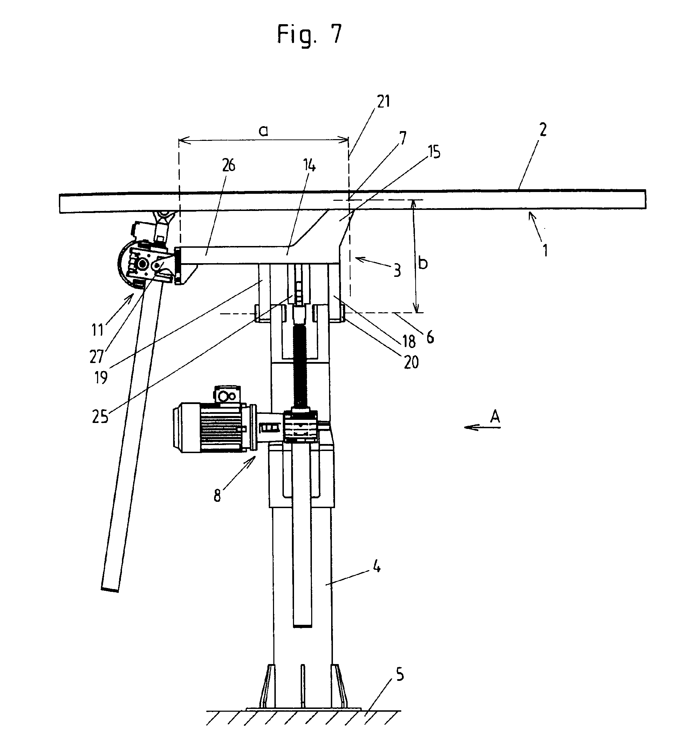

Eine Schwenkeinheit 3 ist einerseits mit dem Traggestell 1, andererseits mit einem turmartigen Steher 4, der gegenüber dem Untergrund 5 (in den Fig. 3 und 7 angedeutet) fest verankert ist, verschwenkbar verbunden. Gegenüber dem Steher 4 ist die Schwenkeinheit 3 um eine horizontale untere Achse 6 verschwenkbar und das Traggestell 1 ist gegenüber der Schwenkeinheit 3 um eine obere Achse 7 verschwenkbar, die rechtwinkelig zur unteren Achse 6 steht. In der in den Fig. 1, 3 und 7 dargestellten Schwenkstellung der Schwenkeinheit 3 bezüglich der Verschwenkung um die untere Achse 6 liegt die obere Achse 7 horizontal. Diese Schwenkstellung der Schwenkeinheit 3 bezüglich der unteren Achse 6, in der die obere Achse 7 horizontal liegt, wird in der vorliegenden Schrift als "Neutralstellung" bezüglich der Verschwenkung um die untere Achse 6 bezeichnet.

Wenn in der Neutralstellung der Schwenkeinheit 3 bezüglich der Verschwenkung um die untere Achse 6 das Traggestell die in den Fig. 1, 3 und 7 dargestellte Schwenkstellung um die obere Achse 7 einnimmt, so liegt das Traggestell 1 bzw. dessen Anlageebene horizontal. Die hierbei eingenommene Schwenkstellung des Traggestells 1 um die obere Achse 7 wird in der vorliegenden Schrift als "Neutralstellung" bezüglich der Verschwenkung um die obere Achse 7 bezeichnet. Wenn sowohl die Neutralstellung bezüglich der Verschwenkung um die untere Achse 6 als auch die Neutralstellung bezüglich der Verschwenkung um die obere Achse 7 eingenommen wird, so wird diese Stellung in der vorliegenden Schrift als "Nullstellung" bezeichnet. Die Nullstellung ist in den Fig. 1, 3 und 7 dargestellt.

Zur Einstellung des Schwenkwinkels der Schwenkeinheit 3 um die untere Achse 6 dient ein unterer Stellantrieb 8. Dieser weist ein in und entgegen einer geradlinigen Stellrichtung 10 verstellbares Stellteil 9 auf. Beispielsweise ist der Stellantrieb 8 in Form eines Spindelantriebs ausgebildet (solche Spindelantriebe werden teilweise auch als Spindelhubgetriebe bezeichnet).

Zur Einstellung des Schwenkwinkels des Traggestells 1 um die obere Achse 7 dient ein oberer Stellantrieb 11. Dieser weist ein gradlinig in und entgegen einer Stellrichtung 13 verstellbares Stellteil 12 auf. Beispielsweise ist der obere Stellantrieb 11 als Spindelantrieb ausgebildet.

Die Schwenkeinheit 3 umfasst einen Basisabschnitt 14. Vom Basisabschnitt 14 stehen bezogen auf die Neutralstellung bezüglich der Verschwenkung um die untere Achse 6 zwei obere Lagerabschnitte 15, 16 nach oben ab, wobei sie insbesondere wie dargestellt schräg nach oben verlaufen. Diese oberen Lagerabschnitte 15, 16 dienen (im Bereich ihrer oberen Enden) zur Ausbildung von Schwenklagern für das Traggestell 1.

Im gezeigten Ausführungsbeispiel wird ein jeweiliger oberer Lagerabschnitt 15, 16 von zwei parallelen Laschen ausgebildet, zwischen denen ein das Traggestell 1 drehbar lagernder Lagerbolzen 17 verläuft. Andere Ausbildungen der oberen Lagerabschnitte 15, 16, beispielsweise in Form von Lagerböcken mit winkelig zueinander stehenden Streben, sind denkbar und möglich. Aus Stabilitätsgründen ist es bevorzugt, dass mindestens zwei obere Lagerabschnitte 15, 16 vorhanden sind, mittels denen mindestens zwei separate in Richtung der oberen Achse 7 voneinander beabstandete Schwenklager ausgebildet werden. Auch mehr als zwei solche oberen Lagerabschnitte 15, 16 könnten vorhanden sein.

Vom Basisabschnitt 14 stehen weiters - bezogen auf die Neutralstellung der Verschwenkung der Schwenkeinheit 3 um die untere Achse 6 - zwei untere Lagerabschnitte 18, 19 nach unten ab. Diese dienen (im Bereich ihrer unteren Enden) zur Ausbildung von Schwenklagern zur schwenkbaren Lagerung der Schwenkeinheit 3 gegenüber dem Steher 4.

Im gezeigten Ausführungsbeispiel werden die unteren Lagerabschnitte 18, 19 jeweils von einem Lagerbock ausgebildet, der von zwei nach unten hin zusammenlaufenden und an ihren unteren Enden miteinander verbundenen Streben gebildet wird. Auf diese Weise werden nach unten sich verjüngende untere Lagerabschnitte 18, 19 ausgebildet. Auch andere Ausbildungen von solchen nach unten sich verjüngenden unteren Lagerabschnitten sind denkbar und möglich, beispielsweise mittels Lagerlaschen. Vorzugsweise sind die unteren Lagerabschnitte 18, 19 dreiecksförmig mit nach unten weisender Spitze ausgebildet.

Aus Stabilitätsgründen ist es bevorzugt, dass mindestens zwei untere Lagerabschnitte 18, 19 vorhanden sind, mittels denen mindestens zwei separate in Richtung der unteren Achse 6 voneinander beabstandete Schwenklager ausgebildet werden. Auch mehr als zwei solche unteren Lagerabschnitte 18, 19 könnten vorgesehen sein. Die Ausbildung von Schwenklagern erfolgt mittels Lagerbolzen 20.

Die Schwenkeinheit 3 kann einteilig oder mehrteilig aus mehreren starr miteinander verbundenen Teilen ausgebildet sein.

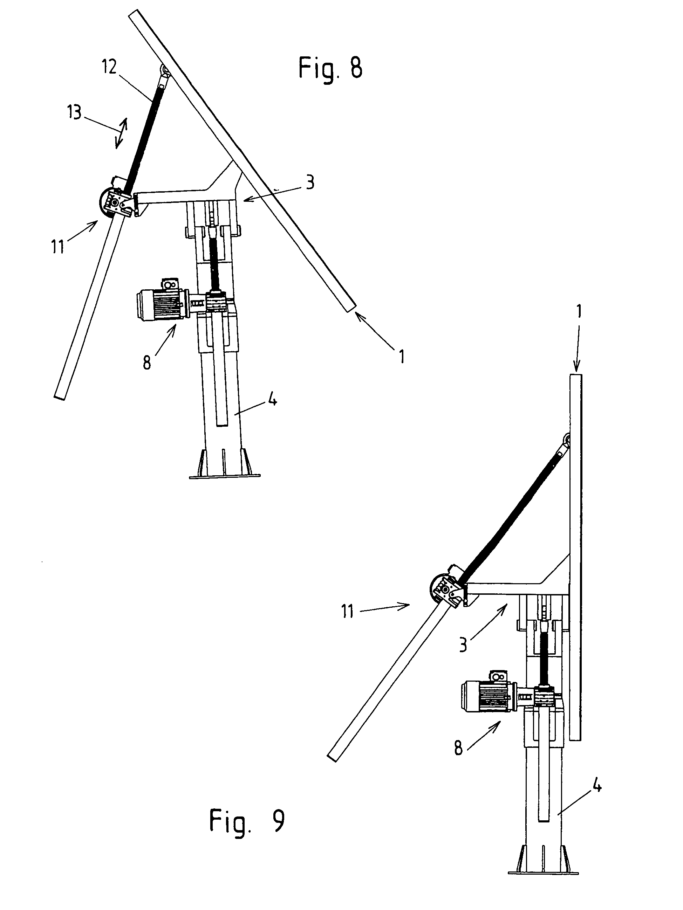

Im gezeigten Ausführungsbeispiel liegt die Ebene 21 (vgl. Fig. 7), in der die obere Achse 7 liegt und die rechtwinkelig zur unteren Achse 6 steht, seitlich neben den beiden unteren Lagerabschnitten 18, 19. Es kann dadurch vorzugsweise eine Verschwenkbarkeit um die obere Achse 7 bis zur vertikalen Ausrichtung des Traggestells 1 bzw. von dessen Anlageebene erreicht werden, wenn sich die Schwenkeinheit 3 in einer beliebigen Schwenkstellung bezüglich der unteren Achse 6 befindet (vgl. Fig. 9).

Die Ebene 22, in der die untere Achse 6 liegt und die rechtwinkelig zur oberen Achse 7 steht, liegt zwischen den beiden oberen Lagerabschnitten 15, 16 (vgl. Fig. 3).

Der untere Stellantrieb 8 greift einerseits am Steher 4 an, und zwar über eine am Steher 4 starr befestigte Konsole 23, an der Lagerböcke 24 befestigt sind, an denen der untere Stellantrieb 8 angelenkt ist. Andererseits greift der untere Stellantrieb 8 an einem Verbindungsstück 25 an, welches bezogen auf die Neutralstellung der Schwenkeinheit 3 bezüglich einer Verschwenkung um die untere Achse 6 vom Basisabschnitt 14 der Schwenkeinheit 3 nach unten absteht. Der untere Stellantrieb 8 ist an diesem Verbindungsstück 25 angelenkt.

Der obere Stellantrieb 11 greift einerseits am Traggestell 1 an, an welchem er direkt oder über ein starr am Traggestell 1 angebrachtes Teil angelenkt ist. Andererseits greift der obere Stellantrieb 11 an einem Arm 26 der Schwenkeinheit 3 an, an der Lagerböcke 27 befestigt sind, an denen der obere Stellantrieb 11 angelenkt ist. Der Arm 26 stellt einen im Wesentlichen horizontal abstehenden Abschnitt des Basisabschnitts 14 der Schwenkeinheit 3 dar, wobei er vom Bereich des Basisabschnitts 14 absteht, von dem die oberen Lagerabschnitte 15, 16 und die unteren Lagerabschnitte 18, 19 ausgehen. Die Verbindungsstelle des oberen Stellantriebs 11 mit dem Arm 26 weist hierbei von der Ebene 21 einen Normalabstand a auf, der mindestens die Hälfte des Normalabstands b zwischen der unteren Achse 6 und der oberen Achse 7 beträgt, vorzugsweise mindestens den gesamten Normalabstand b beträgt (vgl. Fig. 7).

Die Nullstellung, in der das Traggestell 1 bzw. dessen Anlageebene horizontal liegt, kann z.B. beim Einwirken von größeren Windlasten eingenommen werden.

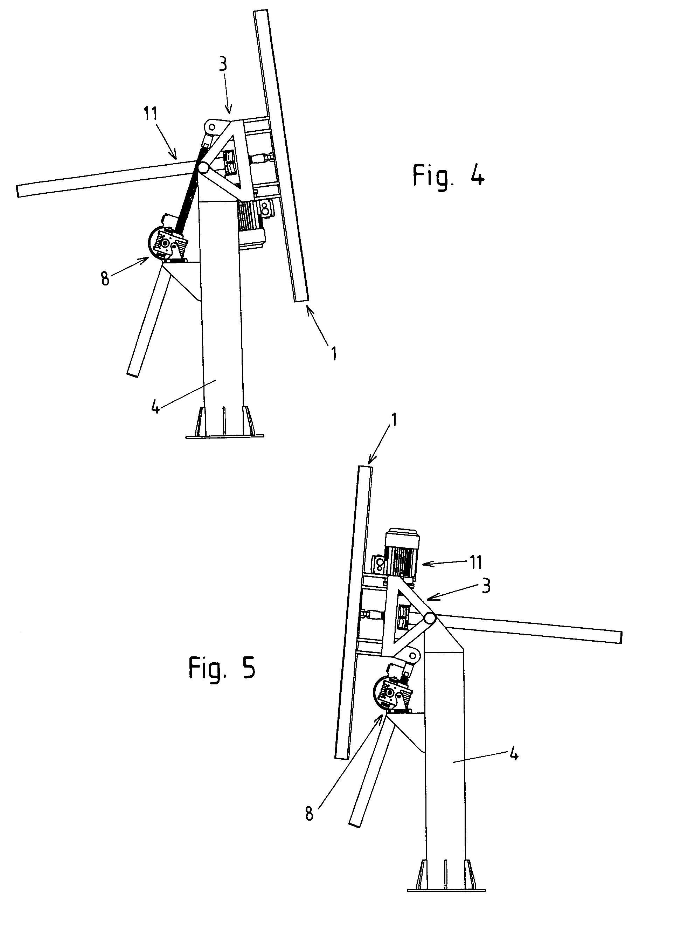

Ausgehend von der Neutralstellung bezüglich der unteren Achse 6 kann die Schwenkeinheit 3 mittels des unteren Stellantriebs 8 in beide Schwenkrichtungen um die untere Achse 6 verschwenkt werden, vorzugsweise über einen Winkelbereich von bis zu jeweils mindestens 75° (vgl. Fig. 4 und 5). Ausgehend von der Neutralstellung bezüglich der oberen Achse 7 kann das Traggestell 1 mittels des oberen Stellantriebs 11 in eine Richtung um die obere Achse 7 über einen Winkelbereich von zumindest mehr als 60° verschwenkt werden, im gezeigten Ausführungsbeispiel bis zu 90° (vgl. Fig. 9).

Durch gleichzeitige Verschwenkung der Schwenkeinheit 3 um die untere Achse 6 und des Traggestells 1 um die obere Achse 7 kann das Traggestell 1 bzw. dessen Anlageebene dem Sonnenstand nachgeführt werden.

### Legende zu den Hinweisziffern:

- 1: Traggestell
- 2: Solarzellenmodul
- 3: Schwenkeinheit
- 4: Steher
- 5: Untergrund
- 6: untere Achse
- 7: obere Achse
- 8: unterer Stellantrieb
- 9: Stellteil
- 10: Stellrichtung
- 11: oberer Stellantrieb
- 12: Stellteil
- 13: Stellrichtung
- 14: Basisabschnitt
- 15: oberer Lagerabschnitt
- 16: oberer Lagerabschnitt
- 17: Lagerbolzen
- 18: unterer Lagerabschnitt
- 19: unterer Lagerabschnitt
- 20: Lagerbolzen
- 21: Ebene
- 22: Ebene
- 23: Konsole
- 24: Lagerbock
- 25: Verbindungsstück
- 26: Arm
- 27: Lagerbock

## Patentansprüche

1. Nachführeinrichtung zur Anpassung der Ausrichtung eines Traggestells (1) an den Sonnenstand, insbesondere für Fotovoltaikanlagen, mit einer Schwenkeinheit (3), welche gegenüber einem Steher (4) mittels einem unteren Stellantrieb (8) um eine horizontale untere Achse (6) verschwenkbar ist und gegenüber welcher das Traggestell (1) mittels einem oberen Stellantrieb (11) um eine obere Achse (7) verschwenkbar ist, die rechtwinkelig zur unteren Achse (6) steht und in einer auf die Verschwenkung der Schwenkeinheit (3) um die untere Achse (6) bezogenen Neutralstellung der Schwenkeinheit (3) horizontal liegt, und welche einen Basisabschnitt (14) und mindestens einen von diesem in der auf die Verschwenkung der Schwenkeinheit (3) um die untere Achse (6) bezogenen Neutralstellung der Schwenkeinheit (3) nach oben abstehenden oberen Lagerabschnitt (15, 16) aufweist, an dem das Traggestell (1) um die obere Achse (7) verschwenkbar gelagert ist, **dadurch gekennzeichnet, dass** die Schwenkeinheit (3) weiters mindestens einen vom Basisabschnitt (14) in der auf die Verschwenkung der Schwenkeinheit (3) um die untere Achse (6) bezogenen Neutralstellung der Schwenkeinheit (3) nach unten abstehenden unteren Lagerabschnitt (18, 19) aufweist, an dem die Schwenkeinheit (3) gegenüber dem Steher (4) um die untere Achse (6) verschwenkbar gelagert ist.

2. Nachführeinrichtung nach Anspruch 1, **dadurch gekennzeichnet, dass** der obere Stellantrieb (11) einerseits am Traggestell (1), andererseits an einer Verbindungsstelle an der Schwenkeinheit (3) angreift, welche von einer Ebene (21), in der die obere Achse (7) liegt und die rechtwinkelig zur unteren Achse (6) steht, einen Normalabstand (a) aufweist, der mindestens die Hälfte des Normalabstands (b) zwischen der unteren Achse (6) und der oberen Achse (7) beträgt.

3. Nachführeinrichtung nach Anspruch 2, **dadurch gekennzeichnet, dass** die Verbindungsstelle an einem Arm (26) der Schwenkeinheit (3) angeordnet ist, der von demjenigen Bereich des Basisabschnitts (14), von dem der mindestens eine obere Lagerabschnitt (15, 16) und der mindestens eine untere Lagerabschnitt (18, 19) ausgehen, im Wesentlichen horizontal absteht.

4. Nachführeinrichtung nach einem der Ansprüche 1 bis 3, **dadurch gekennzeichnet, dass** mindestens zwei obere Lagerabschnitte (15, 16) vorhanden sind, mittels denen mindestens zwei separate in Richtung der oberen Achse (7) voneinander beabstandete Schwenklager ausgebildet werden.

5. Nachführeinrichtung nach Anspruch 4, **dadurch gekennzeichnet, dass** eine die untere Achse (6) aufweisende, rechtwinkelig zur oberen Achse (7) stehende Ebene (22) zwischen den beiden oberen Lagerabschnitten (15, 16) liegt oder, falls mehr als zwei obere Lagerabschnitte (15, 16) vorhanden sind, zwischen den beiden äußeren der oberen Lagerabschnitte (15, 16) liegt.

6. Nachführeinrichtung nach einem der Ansprüche 1 bis 5, **dadurch gekennzeichnet, dass** mindestens zwei untere Lagerabschnitte (18, 19) vorhanden sind, mittels denen mindestens zwei separate in Richtung der unteren Achse (6) voneinander beabstandete Schwenklager ausgebildet werden.

7. Nachführeinrichtung nach Anspruch 6, **dadurch gekennzeichnet, dass** eine die obere Achse (7) aufweisende, rechtwinkelig zur unteren Achse (6) stehende Ebene (21) seitlich neben den mindestens zwei unteren Lagerabschnitten (18, 19) liegt.

8. Nachführeinrichtung nach einem der Ansprüche 1 bis 7, **dadurch gekennzeichnet, dass** die untere Achse (6) in Nord-Süd-Richtung ausgerichtet ist und die obere Achse (7) in der Neutralstellung der Schwenkeinheit (3) bezüglich der Verschwenkung um die untere Achse (6) in Ost-West-Richtung ausgerichtet ist.

9. Nachführeinrichtung nach einem der Ansprüche 1 bis 8**, dadurch gekennzeichnet, dass** ein jeweiliger oberer Lagerabschnitt (15, 16) in der auf die Verschwenkung der Schwenkeinheit (3) um die untere Achse (6) bezogenen Neutralstellung schräg nach oben absteht.

10. Nachführeinrichtung nach einem der Ansprüche 1 bis 9, **dadurch gekennzeichnet, dass** ein jeweiliger unterer Lagerabschnitt (18, 19) sich bezogen auf die Neutralstellung der Verschwenkung der Schwenkeinheit (3) um die untere Achse (6) nach unten verjüngt.

11. Nachführeinrichtung nach einem der Ansprüche 1 bis 10, **dadurch gekennzeichnet, dass** der untere Stellantrieb (8) einerseits am Steher (4) oder an einem mit diesem starr verbundenen Teil (23), andererseits an einem von der Schwenkeinheit (3) in der auf die Verschwenkung der Schwenkeinheit (3) um die untere Achse (6) bezogenen Neutralstellung nach unten abstehenden Verbindungsstück (25) angreift.
